# EUROPEAN PATENT SPECIFICATION

(11) **EP 4 331 184 B1**
(45) Date of publication and mention of the grant of the patent: **19.11.2025**
(21) Application number: 22721122.4
(22) Date of filing: 07.04.2022
(51) Int. Cl.: H04L 12/18, H04L 51/10, H04L 51/08, H04L 51/066, H04L 51/42

(54) **SYSTEMS AND METHODS FOR MANAGING DIGITAL NOTES FOR COLLABORATION**
SYSTEME UND VERFAHREN ZUR VERWALTUNG DIGITALER NOTIZEN FÜR ZUSAMMENARBEIT
SYSTÈMES ET PROCÉDÉS DE GESTION DE NOTES NUMÉRIQUES EN VUE D'UNE COLLABORATION

(30) Priority: 30.04.2021 US 202163182060 P
(43) Date of publication of application: 06.03.2024
(73) Proprietor: 3M Innovative Properties Company, Saint Paul, Minnesota 55133-3427 (US)
(72) Inventor: AXELSSON, Pontus, 111 22 Stockholm (SE); ROTSTEIN, Michael, 111 22 Stockholm (SE); ANSMAN GIERTZ, Nicklas A., New York, New York 10012 (US); KARLSSON, John E., New York, New York 10012 (US)
(74) Representative: Vossius & Partner Patentanwälte Rechtsanwälte mbB
(86) International application number: PCT/IB2022/053279
(87) International publication number: WO 2022/229755

(56) References cited:
- US-A1- 2014 282 077
- US-A1- 2015 106 699
- US-A1- 2015 106 754
- US-A1- 2015 106 760

## Description

### BACKGROUND

Paper notes have been broadly used in recording, sharing, and communicating ideas and information. For example, during a collaboration session (e.g., brainstorming session), participants write down ideas on repositionable paper notes, whiteboard, or paper, and then share with one another. In addition, people commonly use notes throughout the day to memorialize information or content which the individual does not want to forget. As additional examples, people frequently use notes as reminders of actions or events to take in the future, such as to make a telephone call, revise a document or to fill out a time sheet.

Software programs currently exist which permit computer users to create a software-based note in a digital form and to utilize the digital note within a computing environment. For example, a computer user may create a digital note and "attach" the digital note to an electronic document a desktop or electronic workspace presented by the computing environment.

US2015/106699 A1 discloses a method for creating and manipulating software notes representative of physical notes.

### SUMMARY

The invention describes a method and a system for collaboration using notes allows users to capture physical notes via the users devices, such as a mobile phone with a digital camera, for conversion to corresponding digital notes and electronically transfer the digital notes to a shared digital screen or board during a video conferencing session other networked session, or between users devices according to the features of independent method claim 1 and system claim 14, respectively. Additional aspects of the invention are described in the dependent claims.

### BRIEF DESCRIPTION OF THE DRAWINGS

FIG. 1A is a representation illustrating one example of a user capturing an image of a workspace with notes using an image capture device on a mobile device.
FIG. 1B is a block diagram illustrating one example of the mobile device.
FIG. 1C is a block diagram illustrating one example of a note management application executing on the mobile device.
FIG. 1D illustrates another embodiment of a note recognition system.
FIG. 1E illustrates another embodiment of a note management system.
FIG. 2 is a diagram of an architecture for collaboration using notes.
FIGS. 3A-3F illustrate an augmented reality process for collaboration using notes.

### DETAILED DESCRIPTION

### Overview

The present disclosure describes techniques for creating and manipulating software notes representative of physical notes. For example, techniques are described for recognizing physical notes present within a physical environment, capturing information therefrom and creating corresponding digital representations of the physical notes, referred to herein as digital notes or software-based notes. Further, at least some aspects of the present disclosure are directed to techniques for managing multiple notes.

In general, notes can include physical notes and digital notes. Physical notes generally refer to objects with a general boundary and recognizable content. Physical notes can include the resulting objects after people write, draw, or enter via other type of inputs on the objects, for example, paper, white board, or other objects accepting the inputs. By way of examples, physical notes can include hand-written repositionable paper notes, paper, or film, white-board with drawings, posters, and signs. In some cases, physical notes can be generated using digital means, e.g., printing onto printable repositionable paper notes or printed document. In some cases, one object can include several notes. For example, several ideas can be written on a piece of poster paper or a white-board. Physical notes can be two-dimensional or three dimensional. Physical notes can have various shapes and sizes. For example, a physical note may be a 3 inches x 3 inches note; a physical note may be a 26 inches x 39 inches poster; and a physical note may be a triangular metal sign. In some cases, physical notes have known shapes and/or sizes. Digital notes generally refer to digital objects with information and/or ideas. Digital notes can be generated using digital inputs. Digital inputs can include, for example, keyboards, touch screens, digital cameras, digital recording devices, stylus, digital pens, or the like. In some cases, digital notes may be representative of physical notes.

### Note Management System

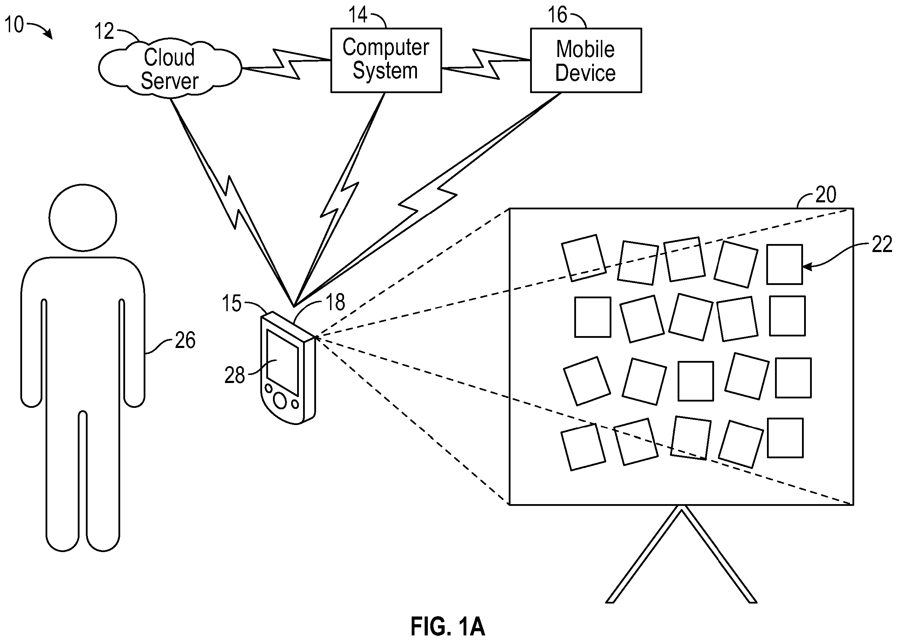

FIG. 1A illustrates an example of a note recognition environment 10. In the example of FIG. 1A, environment 10 includes a mobile device 15 to capture and recognize one of more notes 22 from a workspace 20. As described herein, mobile device provides an execution environment for one or more software applications that, as described, can efficiently capture and extract note content from a large number of physical notes, such as the collection of notes 22 from workspace 20. In this example, notes 22 may be the results of a collaborative brainstorming session having multiple participants. As described, mobile device 15 and the software executing thereon may perform a variety of note-related operations, including automated creation of digital notes representative of physical notes 22 of workspace 20.

In the example implementation, mobile device 15 includes, among other components, an image capture device 18 and a presentation device 28. In addition, although not shown in FIG. 1A, mobile device 15 may include one or more processors, microprocessors, internal memory and/or data storage and other electronic circuitry for executing software or firmware to provide the functionality described herein.

In general, image capture device 18 is a camera or other component configured to capture image data representative of workspace 20 and notes 22 positioned therein. In other words, the image data captures a visual representation of an environment, such as workspace 20, having a plurality of visual notes. Although discussed as a camera of mobile device 15, image capture device 18 may comprise other components capable of capturing image data, such as a video recorder, an infrared camera, a CCD (Charge Coupled Device) array, a laser scanner, or the like. Moreover, the captured image data can include at least one of an image, a video, a sequence of images (i.e., multiple images taken within a time period and/or with an order), a collection of images, or the like, and the term input image is used herein to refer to the various example types of image data.

Presentation device 28 may include, but not limited to, an electronically addressable display, such as a liquid crystal display (LCD) or other type of display device for use with mobile device 28. In some implementations, mobile device 15 generates the content to display on presentation device 28 for the notes in a variety of formats, for example, a list, grouped in rows and/or column, a flow diagram, or the like. Mobile device 15 may, in some cases, communicate display information for presentation by other devices, such as a tablet computer, a projector, an electronic billboard or other external device.

As described herein, mobile device 15, and the software executing thereon, provide a platform for creating and manipulating digital notes representative of physical notes 22. For example, in general, mobile device 15 is configured to process image data produced by image capture device 18 to detect and recognize at least one of physical notes 22 positioned within workspace 20. In some examples, the mobile device 15 is configured to recognize note(s) by determining the general boundary of the note(s). After a note is recognized, mobile device 15 extracts the content of at least one of the one or more notes, where the content is the visual information of note 22.

In some example implementations, mobile device 15 provides functionality by which user 26 is able to export the digital notes to other systems, such as cloud-based repositories (e.g., cloud server 12) or other computing devices (e.g., computer system 14 or mobile device 16).

In the example of FIG. 1A, mobile device 15 is illustrated as a mobile phone. However, in other examples, mobile device 15 may be a tablet computer, a personal digital assistant (PDA), a laptop computer, a media player, an e-book reader, a wearable computing device (e.g., a watch, eyewear, a glove), or any other type of mobile or non-mobile computing device suitable for performing the techniques described herein.

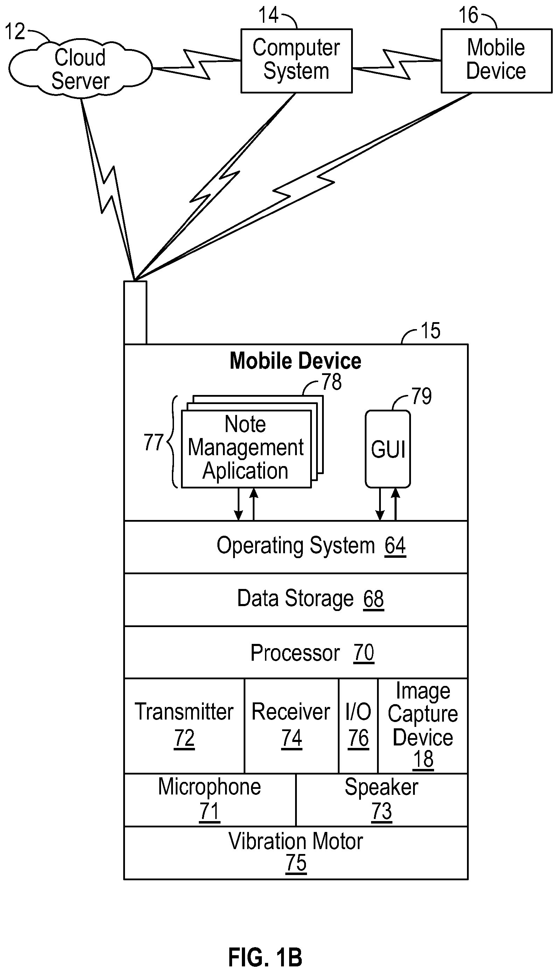

FIG. 1B illustrates a block diagram illustrating an example of a mobile device that operates in accordance with the techniques described herein. For purposes of example, the mobile device of FIG. 1B will be described with respect to mobile device 15 of FIG. 1A

In this example, mobile device 15 includes various hardware components that provide core functionality for operation of the device. For example, mobile device 15 includes one or more programmable processors 70 configured to operate according to executable instructions (i.e., program code), typically stored in a computer-readable medium or data storage 68 such as static, random-access memory (SRAM) device or Flash memory device. I/O 76 may include one or more devices, such as a keyboard, camera button, power button, volume button, home button, back button, menu button, or presentation device 28 as described in FIG. 1A. Transmitter 72 and receiver 74 provide wireless communication with other devices, such as cloud server 12, computer system 14, or other mobile device 16 as described in FIG. 1A, via a wireless communication interface as described in FIG. 1A, such as but not limited to high-frequency radio frequency (RF) signals. A microphone 71 converts audio information into corresponding electrical signals. A speaker 73 converts electrical signals into corresponding audio information. A vibration motor 75 is used to cause mobile device 15, or housing for it, to vibrate. Mobile device 15 may include additional discrete digital logic or analog circuitry not shown in FIG. 1B.

In general, operating system 64 executes on processor 70 and provides an operating environment for one or more user applications 77 (commonly referred to "apps"), including note management application 78. User applications 77 may, for example, comprise executable program code stored in computer-readable storage device (e.g., data storage 68) for execution by processor 70. As other examples, user applications 77 may comprise firmware or, in some examples, may be implemented in discrete logic.

In operation, mobile device 15 receives input image data and processes the input image data in accordance with the techniques described herein. For example, image capture device 18 may capture an input image of an environment having a plurality of notes, such as workspace 20 of FIG. 1A having of notes 22. As another example, mobile device 15 may receive image data from external sources, such as cloud server 15, computer system 14 or mobile device 16, via receiver 74. In general, mobile device 15 stores the image data in data storage 68 for access and processing by note management application 78 and/or other user applications 77.

As shown in FIG. 1B, user applications 77 may invoke kernel functions of operating system 64 to output a graphical user interface (GUI) 79 for presenting information to a user of mobile device. As further described below, note management application 78 may construct and control GUI 79 to provide an improved electronic environment for generating and manipulating corresponding digital notes representative of physical notes 22. For example, note management application 78 may construct GUI 79 to include mechanisms that allows user 26 to easily control events that are automatically triggered in response to capturing notes of certain characteristics. In addition, note management application 78 may construct GUI 79 to include mechanisms that allow user 26 to manage relationships between groups of the digital notes.

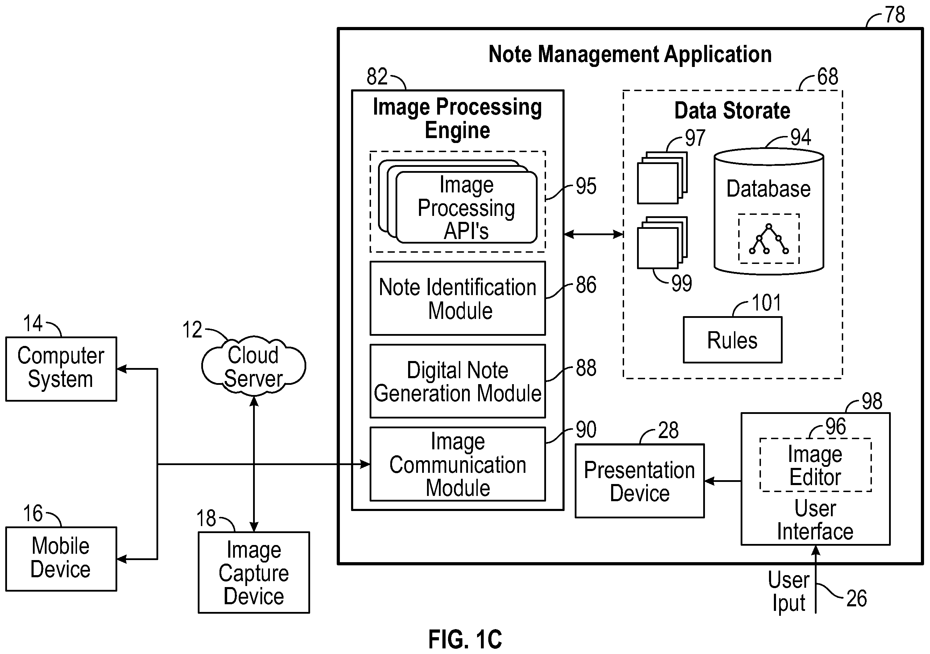

FIG. 1C is a block diagram illustrating one example implementation of note management application 78 that operates in accordance with the techniques described herein. Although described as a user application 77 executing on mobile device 15, the examples described herein may be implemented on any computing device, such as cloud server 12, computer system 14, or other mobile devices.

In this example, note management application 78 includes image processing engine 82 that provides image processing and object recognition functionality. Image processing engine 82 may include image communication module 90, note identification module 86 and digital note generation module 88. In addition, image processing engine 82 includes image processing Application Programming Interfaces (APIs) 95 that provide a library of image manipulation functions, e.g., image thresholding, masking, filtering, edge detection, and the like, for use by the other components of image processing engine 82.

In general, image data may be stored in data storage device 68. In this example, note management application 78 stores images 97 within data storage device 68. Each of images 97 may comprise pixel data for environments having a plurality of physical images, such as workspace 20 of FIG. 1A.

As described herein, note identification module 86 processes images 97 and identifies (i.e., recognizes) the plurality of physical notes in the images. Digital note generation module 88 generates digital notes 99 corresponding to the physical notes recognized within the images 97. For example, each of digital notes 99 corresponds to one of the physical notes identified in an input image 97. During this process, digital note generation module 88 may update database 94 to include a record of the digital note, and may store within the database information (e.g., content) extracted from the input image within boundaries determined for the physical note as detected by note identification module 86. Moreover, digital note generation module 88 may store within database 94 metadata associating the digital notes into one or more groups of digital notes.

Further, note management application 78 may be configured, e.g., by user input 26, to specify rules 101 that trigger actions in response to detection of physical notes having certain characteristics. For example, user interface 98 may, based on the user input, map action to specific characteristics of notes. Note management application 78 may output user interface 98 by which the user is able to specify rules having actions, such as a note grouping action, or an action related to another software application executing on the mobile device, such as an action related to a calendaring application. For each rule, user interface 98 allows the user to define criteria for triggering the actions. During this configuration process, user interface 98 may prompt the user to capture image data representative of an example note for triggering an action and process the image data to extract characteristics, such as color or content. User interface 98 may then present the determined criteria to the user to aid in defining corresponding rules for the example note.

Image communication module 90 controls communication of image data between mobile device 15 and external devices, such as cloud server 12, computer system 14, mobile device 16, or image capture device 18. In some examples, image communication module 90 may, for example, allow a user to communicate processed or unprocessed images 97 of environments and/or digital notes and associated information extracted therefrom including metadata from database 68. In some examples, image communication module 90 exports this data to a zip file that may be communicated by FTP, HTTP, email, Bluetooth or other mechanism.

In the example of FIG. 1C, note management application 78 includes user interface 98 that constructs and controls GUI 79 (FIG. 1B). As described below, user interface 98 may, in some examples, output for display an input image 97 overlaid with the plurality of digital notes 99, where each of the digital notes is overlaid in place of a corresponding physical note. In addition, user interface 98 may display a group of digital notes 99 that has been designated by the user. This group of digital notes 99 may be, for example, a subset of the digital notes recognized in a particular input image 97. User interface 98 may display this designated group (set) of the digital notes on a second portion of GUI 79 and allow user 26 to easily add or remove digital notes 99 from the designated group.

In some example implementations, user interface 98 provides an image editor 96 that allows a user to edit the overlay image and/or the digital notes. In another example, digital note generation module 88 may include a process or processes that enhances the extracted information from the input image.

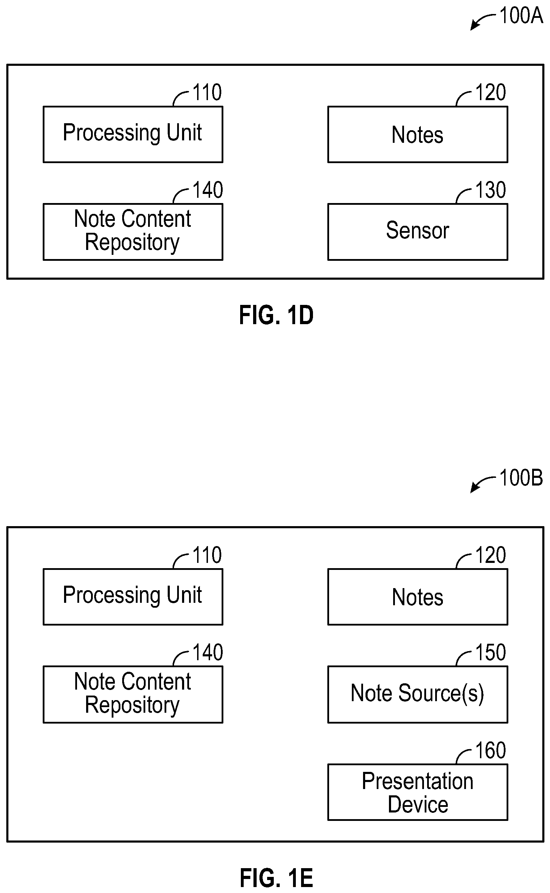

FIG. 1D illustrates another example embodiment of a note recognition system 100A. The system 100A can include a processing unit 110, one or more notes 120, a sensor 130, and note content repository 140. The processing unit 110 can include one or more processors, microprocessors, computers, servers, and other computing devices. The sensor 130, for example, an image sensor, is configured to capture a visual representation of a scene having the one or more notes 120. The sensor 130 can include at least one of a camera, a video recorder, an infrared camera, a CCD (Charge Coupled Device) array, a scanner, or the like. The visual representation can include at least one of an image, a video, a sequence of images (i.e., multiple images taken within a time period and/or with an order), a collection of images, or the like. The processing unit 110 is coupled to the sensor 130 and configured to receive the visual representation. In some cases, the processing unit 110 is electronically coupled to the sensor 130. The processing unit 110 is configured to recognize at least one of the one or more notes 120 from the visual representation. In some embodiments, the processing unit 110 is configured to recognize note(s) by determining the general boundary of the note(s). After a note is recognized, the processing unit 110 extracts the content of the note. In some cases, the processing unit 110 is configured to recognize and extract the content of more than one note from a visual representation of a scene having those notes.

In some cases, the processing unit 110 can execute software or firmware stored in non-transitory computer-readable medium to implement various processes (e.g., recognize notes, extract notes, etc.) for the system 100A. The note content repository 140 may run on a single computer, a server, a storage device, a cloud server, or the like. In some other cases, the note content repository 140 may run on a series of networked computers, servers, or devices. In some implementations, the note content repository 140 includes tiers of data storage devices including local, regional, and central. The notes 120 can include physical notes arranged orderly or randomly in a collaboration space and the sensor 130 generates a visual representation of the notes 120 in the collaboration space.

In some implementations, the note recognition system 100A can include a presentation device (not shown in FIG. 1D) to show to the user which notes are recognized and/or which notes' content have been extracted. Further, the note recognition system 100A can present the extracted content via the presentation device. In some embodiments, the processing unit 110 can authenticate a note before extracting the content of the note. If the note is authenticated, the content will be extracted and stored in the note content repository 140.

FIG. 1E illustrates an embodiment of a note management system 100B. In this embodiment, the note management system 100B includes processing unit 110, one or more notes 120, one or more note sources 150, and a note content repository 140. In some cases, the system 100B includes a presentation device 160. The processing unit 110, the notes 120, and the note content repository 140 are similar to the components for the note recognition system 100A as illustrated in FIG. 1A. The note sources 150 can include sources to provide content of physical notes, such as a visual representation of a scene having one or more notes, and sources to provide content of digital notes, such as a data stream entered from a keyboard. In some embodiments, the note management system 100B includes a first source and a second source, and the first source is a visual representation of a scene having one or more notes 120. The first source and the second source are produced by different devices. The second source includes at least one of a text stream, an image, a video, a file, and a data entry. The processing unit 110 recognizes at least one of the notes from the first source and extracts the content of the note, as discussed in the note recognition system 100A. In some cases, the processing unit 110 labels the note with a category. The processing unit 110 can label a note based on its specific shape, color, content, and/or other information of the note. For example, each group of note can have a different color (e.g., red, green, yellow, etc.).

In some embodiments, the note management system 100B can include one or more presentation devices 160 to show the content of the notes 120 to the user. The presentation device 160 can include, but not limited to, an electronically addressable display, such as a liquid crystal display (LCD), a tablet computer, a projector, an electronic billboard, a cellular phone, a laptop, or the like. In some implementations, the processing unit 110 generates the content to display on the presentation device 160 for the notes in a variety of formats, for example, a list, grouped in rows and/or column, a flow diagram, or the like.

Various components of the note recognition system and note management system, such as processing unit, image sensor, and note content repository, can communicate via a communication interface. The communication interface includes, but not limited to, any wired or wireless short-range and long-range communication interfaces. The short-range communication interfaces may be, for example, local area network (LAN), interfaces conforming to a known communications standard, such as Bluetooth standard, IEEE 802 standards (e.g., IEEE 802.11), a ZigBee or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

### Collaboration Using Notes

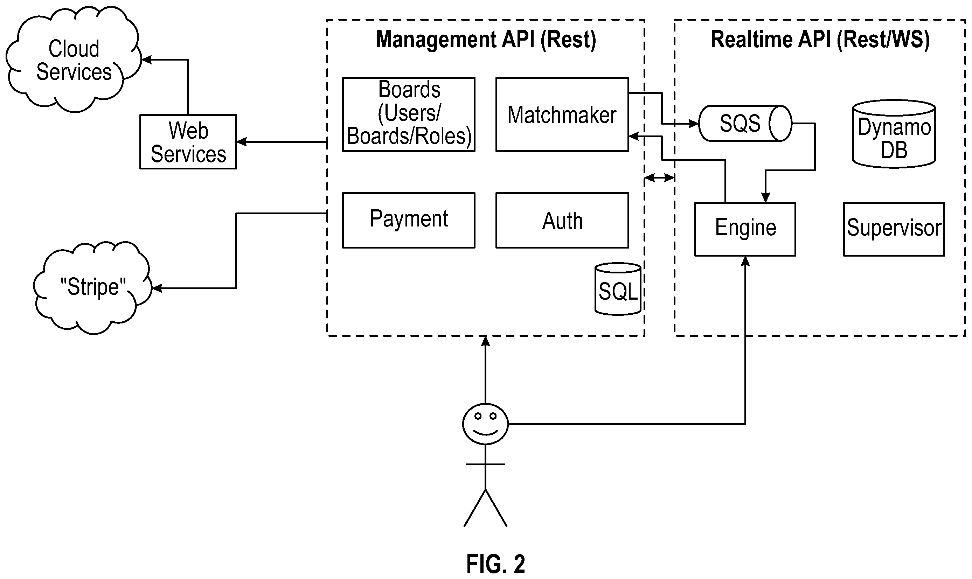

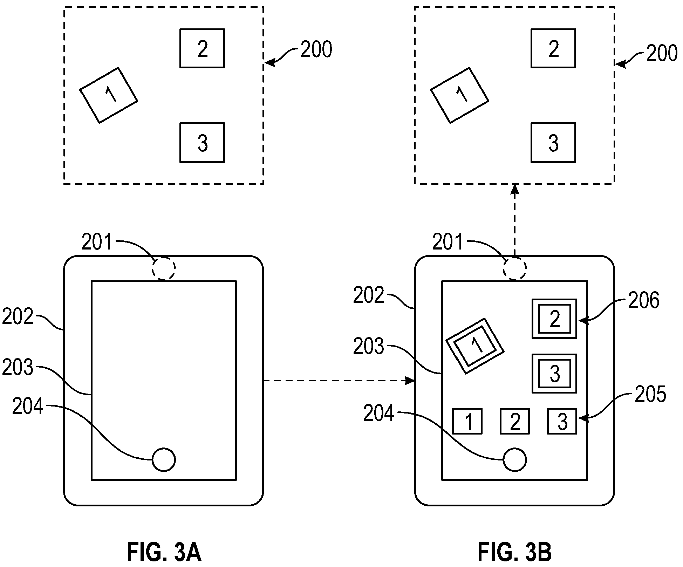

A collaboration session allows each user to share digital notes within a group of participants. FIG. 2 is a diagram of an architecture for collaboration using notes. FIGS. 3A-3F illustrate an augmented reality process for collaboration using notes within, for example, the architecture of FIG 2.

As shown in FIG. 3A, a mobile device 202 having a display device 203 and a digital camera 201 can be used to capture an image or video of physical notes 200. Mobile device 202 can correspond with mobile device 15, display device 203 can correspond with presentation device 28 (possibly with a touch screen), and digital camera 201 can correspond with image capture device 18. Physical notes 200 (labeled 1, 2, 3) can be, for example, repositionable paper notes. Three physical notes are shown for illustrative purposes only; this augmented reality feature can be used with more or fewer notes. Aside from a mobile device, other user devices can be used to capture and convert the physical notes, for example a digital camera pointed at the physical notes and electronically connected to a computer or computing device.

As shown in FIG. 3B, mobile device 202 can be positioned such that physical notes 200 are within view of digital camera 201. When in view, physical notes 200 appear on display device 203, shown as highlighted notes 206. The notes appearing on display device 203 in camera view can be highlighted with a box around the notes as shown or in other ways. When a user presses or activates a button 204 with the physical notes 200 in view, the physical notes are converted to corresponding digital notes, which appear as digital notes 205 on display device 203. Aside from using button 204, other commands can be used to convert physical notes 200 to corresponding digital notes 205. Digital notes 205 can be contained and viewed within a private area or board viewable by the user, but not shared with others, where the user can possibly work on or modify the digital notes. Physical notes can be converted to corresponding digital notes as described in the Note Management Section above, for example. A user can also create digital notes in addition to or as an alternative to converting physical notes to digital notes.

The digital notes 205 can now be shared with other users during a video conferencing session other type of networked session, or between users devices. Examples of video conferencing applications include the Teams product by Microsoft Corporation and the Zoom product by Zoom Video Communications, Inc. Alternatively, the users can share screens or a board through a network connection that allows sharing or presenting a digital screen or a digital board to the other users through the network connection. The shared screen or board would be viewable by the users participating in the session. The video conferencing session, when used for this augmented reality feature, can include a default timer or a timer set by one of more of the users participating in the session.

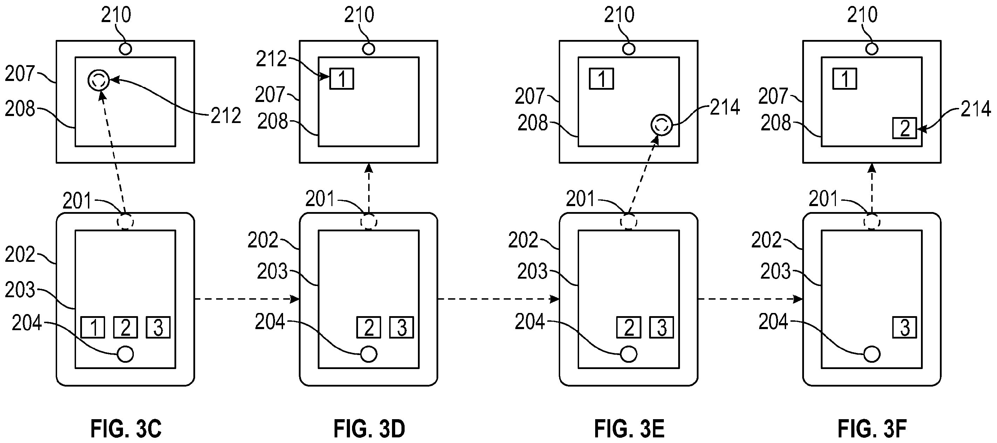

As shown in FIG. 3C, a user using mobile device 202 can transfer one of the digital notes (note 1) to a shared digital screen or board 208 shown on a display device on a computing device 207. Computing device can also have a digital camera 210 for use during a video conferencing session, if digital notes are transferred during such a video conferencing session. Alternatively, the digital notes can be transferred during a networked session where the users participating in the session can view the shared screen or board on their respective devices and may communicate with each other via a phone or in other ways. As another alternative, a user can transfer digital notes from the user's mobile phone to the user's other devices such as a laptop or tablet computer, or other electronic device.

In order to transfer this digital note, a user holds mobile device 202 in view of digital camera 210 to position a target icon 212 at a particular location on screen or board 208. Moving mobile device 202 around in view of digital camera 210 causes corresponding movement of target icon 212 on shared screen or board 208. Although the target icon is shown as a circle with lines within the circle, it can be implemented with other types of icons or symbols.

As shown in FIG. 3D, when the user presses or activates button 204, this digital note (note 1) is electronically transferred from mobile device 202 to screen or board 208 and appears on screen or board 208 at or proximate the location of icon 212. This digital note is also removed from display on display device 203. The digital note can be electronically transferred via a network connection such as, for example, the same network connection used for the video conferencing session or other network connection. Aside from pressing or activating button 204, the digital note can be transferred using other commands such as tapping the note.

As shown in FIG. 3E, a user using mobile device 202 can transfer another one of the digital notes (note 2) to a location on shared screen or board 208 different from the location of the first digital note (note 1). In order to transfer this digital note, a user holds mobile device 202 in view of digital camera 210 to position a target icon 214 at a particular location on screen or board 208. Moving mobile device 202 around in view of digital camera 210 causes corresponding movement of target icon 214 on shared screen or board 208. Target icon 214 can be implemented with the same as for icon 212 or a different icon or symbol.

As shown in FIG. 3F, when the user presses or activates button 204, this digital note (note 2) is electronically transferred from mobile device 202 to screen or board 208 and appears on screen or board 208 at or proximate the location of icon 214. This digital note is also removed from display on display device 203. The digital note can be electronically transferred via a network connection such as, for example, the same network connection used for the video conferencing session or other network connection.

In this manner, as shown in FIGS. 3C-3F, a user can sequentially transfer one or more of the digital notes (e.g., notes 1, 2, 3) to the shared screen or board during the video conferencing session or other type of networked session. The digital notes can be sequentially transferred in any order, possibly as determined by the user. Alternatively the digital notes can be transferred in groups, for example all of the digital notes or a subset of them. The digital notes on the shared screen or board can optionally be electronically sent to users participating in the session when the session ends or after the session ends.

As another alternative, a user can transfer physical notes in addition to digital notes. By executing a particular command, a physical note can be automatically converted to a corresponding digital note and transferred to the shared screen or board. For example, a user could point to or circle a physical note, or press or activate a particular button on display device 203, when the physical note is within view of digital camera 201 in mobile device 202.

This augmented reality feature thus provides a user with a way to capture physical notes and a private area to work on the corresponding digital notes, as shown by notes 205 and FIGS. 3A-3B, and a straightforward user-friendly way to transfer the digital notes to a shared screen or board, as illustrated in FIGS. 3C-3F, viewable by users participating in a session.

### Private/Personal Staging Areas in Shared Boards

When collaborating with other users or participants in shared boards, users can capture physical notes converted to digital notes and create digital notes to a private area of an electronic device (e.g., mobile phone) where the digital notes can be sorted, edited, and deleted before sharing with other users or participants. This feature captures the important aspect of analog collaboration where users or participants work "alone together," privately capturing and creating their own notes and then selectively sharing those digital notes with the other users or participants. This feature also democratizes thought since the participants do not view everyone's notes at the same time, do not feel the pressure to conform to the notes of others, and when digital notes are finally moved into the shared boards, the digital notes all appear the same. These aspects are an inherent strength of physical repositionable notes, and this feature provides for that advantage with digital notes.

### Multiple Perspectives in the Same Board

Notes can be sorted and/or visualized many ways in the same board. For instance, users or participants could switch between the following: displaying digital notes in visual boards that display a collection of notes; displaying an hierarchical list that shows only the text of notes as converted through optical character recognition; and a KANBAN board (workflow visualization tool) that shows notes visually, but removes spatial information to only focus on state and sorting. Users or participants could also sort digital notes by organizing and/or filtering them by known attributes (metadata) such as timestamp, color, size, alphanumerical text, author, session ID, or other attributes. This feature provides new capabilities to digital notes that are not possible in the analog world of physical (e.g., paper) repositionable notes.

### Synthesis

This feature involves finding coherence or meaning within all the notes. For instance, this feature could involve using a computer to help find common concepts, automatically create groups of digital notes based on the content of those concepts, create groups and then automatically sort the digital notes based on content, automatically find duplicates, or automatically perform other actions on the notes. This feature can be powered by machine learning techniques. For example, the system could provide predefined electronic templates (e.g., flowcharts, themes, swot, fishbone, etc.) and utilize machine learning to assist the user by automatically pre-sorting the digital notes into the selected template logically based on content.

## Claims

1. A method for collaboration using notes, comprising steps of executed by a processor (70):
obtaining, via a user device (202), a digital image or digital video of a plurality of individual physical notes;
converting the plurality of physical notes (22, 200) to corresponding digital notes (99, 205);
displaying the digital notes (99, 205) on a display device (203) of the user device (202);
receiving, via the user device (202), a location on a shared digital screen or board (208); and
electronically transferring at least one of the digital notes (99, 205) to the location on the shared digital screen or board (208).

2. The method of claim 1, wherein the transferring step comprises receiving on the user device activation of a button (204).

3. The method of claim 1, further comprising displaying on the user device a private area for a user (26) to work on the digital notes (99, 205), wherein the digital notes (99, 205) are viewable by the user (26) but not shared with others.

4. The method of claim 1, wherein the transferring step comprises transferring a digital note (99, 205) created by a user (26).

5. The method of claim 1, wherein the transferring step comprises transferring the digital notes (99, 205) in a sequential manner.

6. The method of claim 1, wherein the transferring step comprises transferring the digital notes (99, 205) as a group.

7. The method of claim 1, wherein the transferring step comprises transferring a subset of the digital notes (99, 205).

8. The method of claim 1, wherein the transferring step comprises transferring the at least one of the digital notes (99, 205) during a video conferencing session.

9. The method of claim 1, wherein the transferring step comprises transferring the at least one of the digital notes (99, 205) during a networked session.

10. The method of claims 8 or 9, further comprising setting a default timer for the session.

11. The method of claims 8 or 9, further comprising setting a timer for the session based upon input from a user participating in the session.

12. The method of claims 8 or 9, further comprising sending the digital notes (99, 205) to users (26) participating in the session when the session ends or after the session ends.

13. The method of claim 1, wherein the transferring step comprises transferring the at least one of the digital notes (99, 205) from a user (26)'s mobile phone to another one of the user's electronic devices.

14. A system for collaboration using notes, comprising a processor (70) configured to execute all the steps of any of the methods of claims 1-13.

## Patentansprüche

1. Ein Verfahren zur Zusammenarbeit unter Verwendung von Notizen, aufweisend Schritte, die durch einen Prozessor (70) ausgeführt werden:
Erhalten, über eine Benutzervorrichtung (202), eines digitalen Bilds oder digitalen Videos einer Mehrzahl von individuellen physischen Notizen;
Umwandeln der Mehrzahl von physischen Notizen (22, 200) in entsprechende digitale Notizen (99, 205);
Anzeigen der digitalen Notizen (99, 205) auf einer Anzeigevorrichtung (203) der Benutzervorrichtung (202);
Empfangen, über die Benutzervorrichtung (202), einer Position auf einem gemeinsam genutzten digitalen Bildschirm oder Board (208); und
elektronisches Übertragen mindestens einer der digitalen Notizen (99, 205) an die Position auf dem gemeinsam genutzten digitalen Bildschirm oder Board (208).

2. Das Verfahren nach Anspruch 1, wobei der Übertragungsschritt das Empfangen auf der Benutzervorrichtung einer Aktivierung einer Schaltfläche (204) aufweist.

3. Das Verfahren nach Anspruch 1, ferner aufweisend das Anzeigen auf der Benutzervorrichtung eines privaten Bereichs für einen Benutzer (26), um an den digitalen Notizen (99, 205) zu arbeiten, wobei die digitalen Notizen (99, 205) für den Benutzer (26) sichtbar sind, aber nicht mit anderen gemeinsam genutzt werden.

4. Das Verfahren nach Anspruch 1, wobei der Übertragungsschritt das Übertragen einer digitalen Notiz (99, 205), die durch einen Benutzer (26) erstellt ist, aufweist.

5. Das Verfahren nach Anspruch 1, wobei der Übertragungsschritt das Übertragen der digitalen Notizen (99, 205) auf eine sequentielle Weise aufweist.

6. Das Verfahren nach Anspruch 1, wobei der Übertragungsschritt das Übertragen der digitalen Notizen (99, 205) als Gruppe aufweist.

7. Das Verfahren nach Anspruch 1, wobei der Übertragungsschritt das Übertragen einer Teilmenge der digitalen Notizen (99, 205) aufweist.

8. Das Verfahren nach Anspruch 1, wobei der Übertragungsschritt das Übertragen der mindestens einen der digitalen Notizen (99, 205) während einer Videokonferenzsitzung aufweist.

9. Das Verfahren nach Anspruch 1, wobei der Übertragungsschritt das Übertragen der mindestens einen der digitalen Notizen (99, 205) während einer Netzwerksitzung aufweist.

10. Das Verfahren nach Anspruch 8 oder 9, ferner aufweisend das Einstellen eines Standard-Zeitgebers für die Sitzung.

11. Das Verfahren nach Anspruch 8 oder 9, ferner aufweisend das Einstellen eines Zeitgebers für die Sitzung basierend auf der Eingabe von einem Benutzer, der an der Sitzung teilnimmt.

12. Das Verfahren nach Anspruch 8 oder 9, ferner aufweisend das Senden der digitalen Notizen (99, 205) an die Benutzer (26), die an der Sitzung teilnehmen, wenn die Sitzung beendet wird oder nachdem die Sitzung beendet wurde.

13. Das Verfahren nach Anspruch 1, wobei der Übertragungsschritt das Übertragen der mindestens einen der digitalen Notizen (99, 205) von dem Mobiltelefon eines Benutzers (26) an eine andere der elektronischen Vorrichtungen des Benutzers aufweist.

14. Ein System zur Zusammenarbeit unter Verwendung von Notizen, aufweisend einen Prozessor (70), der konfiguriert ist, um alle Schritte eines der Verfahren nach einem der Ansprüche 1 bis 13 auszuführen.

## Revendications

1. Procédé de collaboration à l'aide de notes, comprenant des étapes exécutées par un processeur (70) consistant à :
obtenir, par l'intermédiaire d'un dispositif utilisateur (202), une image numérique ou une vidéo numérique d'une pluralité de notes physiques individuelles ;
convertir la pluralité de notes physiques (22, 200) en notes numériques correspondantes (99, 205) ;
afficher les notes numériques (99, 205) sur un dispositif d'affichage (203) du dispositif utilisateur (202) ;
recevoir, par l'intermédiaire du dispositif utilisateur (202), un emplacement sur un affichage ou un tableau numérique partagé (208) ; et
transférer électroniquement au moins une des notes numériques (99, 205) vers l'emplacement sur l'affichage ou le tableau numérique partagé (208).

2. Procédé selon la revendication 1, dans lequel l'étape de transfert comprend la réception sur le dispositif utilisateur de l'activation d'un bouton (204).

3. Procédé selon la revendication 1, comprenant en outre l'affichage sur le dispositif utilisateur d'une zone privée permettant à un utilisateur (26) de travailler sur les notes numériques (99, 205), dans lequel les notes numériques (99, 205) sont visibles par l'utilisateur (26) mais ne sont pas partagées avec d'autres.

4. Procédé selon la revendication 1, dans lequel l'étape de transfert comprend le transfert d'une note numérique (99, 205) créée par un utilisateur (26).

5. Procédé selon la revendication 1, dans lequel l'étape de transfert comprend le transfert des notes numériques (99, 205) de manière séquentielle.

6. Procédé selon la revendication 1, dans lequel l'étape de transfert comprend le transfert des notes numériques (99, 205) en tant que groupe.

7. Procédé selon la revendication 1, dans lequel l'étape de transfert comprend le transfert d'un sous-ensemble des notes numériques (99, 205).

8. Procédé selon la revendication 1, dans lequel l'étape de transfert comprend le transfert de l'au moins une des notes numériques (99, 205) au cours d'une session de vidéoconférence.

9. Procédé selon la revendication 1, dans lequel l'étape de transfert comprend le transfert de l'au moins une des notes numériques (99, 205) au cours d'une session en réseau.

10. Procédé selon les revendications 8 ou 9, comprenant en outre la définition d'un temporisateur par défaut pour la session.

11. Procédé selon les revendications 8 ou 9, comprenant en outre le réglage d'un temporisateur pour la session sur la base de données fournies par un utilisateur participant à la session.

12. Procédé selon les revendications 8 ou 9, comprenant en outre l'envoi des notes numériques (99, 205) aux utilisateurs (26) participant à la session à la fin de la session ou après la fin de la session.

13. Procédé selon la revendication 1, dans lequel l'étape de transfert comprend le transfert de l'au moins une des notes numériques (99, 205) du téléphone portable d'un utilisateur (26) vers les autres appareils électroniques d'un utilisateur.

14. Système de collaboration à l'aide de notes, comprenant un processeur (70) configuré pour exécuter toutes les étapes de l'un quelconque des procédés selon les revendications 1 à 13.
